# EUROPÄISCHE PATENTANMELDUNG

(11) **EP 3 715 685 A1**
(43) Veröffentlichungstag der Anmeldung: **30.09.2020**
(21) Anmeldenummer: 19166247.7
(22) Anmeldetag: 29.03.2019
(51) Int. Cl.: F16K 15/03, F16K 17/00

(54) **RÜCKSCHLAGVORRICHTUNG INSBESONDERE FÜR ROHGASLEITUNGEN VON FILTERNDEN ABSCHEIDERN**

(71) Anmelder: Rembe GmbH Safety + Control, 59929 Brilon (DE)
(72) Erfinder: PENNO, Stefan, 59929 Brilon (DE); BUNSE, Roland, 59929 Brilon (DE)
(74) Vertreter: Graefe, Jörg

(57) **Zusammenfassung**

Die Erfindung betrifft eine Rückschlagvorrichtung z.B. für eine Rohgasleitung mit
- einem Gehäuse (1),
- einem in dem Gehäuse (1) angeordneten Sitz und
- einer Klappe (3), die schwenkbar in dem Gehäuse (1) befestigt ist und in einem geschlossenen Zustand der Rückschlagvorrichtung auf dem Sitz liegt und in einem geöffneten Zustand der Rückschlagvorrichtung von dem Sitz abgehoben ist,
wobei die Klappe (3) an dem Gehäuse (1) wenigstens ein biegsames Verbindungselement (4) aufweist, das mit einem ersten Endbereich an dem Gehäuse (1) befestigt ist und mit einem zweiten Endbereich an der Klappe (3) befestigt ist.

## Beschreibung

Die vorliegende Erfindung betrifft eine Rückschlagvorrichtung z.B. für eine Rohgasleitung von filternden Abscheidern mit
- einem Gehäuse,
- einem in dem Gehäuse angeordneten Sitz und
- einer Klappe, die schwenkbar in dem Gehäuse befestigt ist und in einem geschlossenen Zustand der Rückschlagvorrichtung auf dem Sitz liegt und in einem geöffneten Zustand der Rückschlagvorrichtung von dem Sitz abgehoben ist.

Die Anmelderin bietet unter der Bezeichnung "Q-FLAP RX" eine Rückschlagvorrichtung mit einer Klappe an. Diese ist dazu geeignet auf der Saugseite einer technischen Einrichtung in einer Rohrleitung eingebaut zu werden und bei einer Explosion in der technischen Einrichtung, die sich über die Rohrleitung ausbreitet, die Rohgasleitung zu verschließen, um so eingangsseitig zur Rückschlagvorrichtung anordnete Anlagenteile von der technischen Einrichtung zu entkoppeln und so vor der sich sonst über die Rohrleitung ausbreitenden Explosion zu schützen.

Die Klappe von bekannten Rückschlagvorrichtungen ist üblicherweise über Scharniere oder Schwenklager mit dem Gehäuse verbunden. Diese müssen mitunter gewartet oder kontrolliert werden.

Für eine wirkungsvolle Entkopplung ist es notwendig, dass die in dem Gehäuse einer Rückschlagvorrichtung schwenkbar angeordnete Klappe im Explosionsfall in ihre Schließstellung schwenkt. Große Bedeutung hat auch, dass die Klappe in ihrer Schließstellung gut auf dem Sitz aufliegt.

Beides kann dadurch erreicht werden, dass die Klappe bei der Montage in dem Gehäuse sorgsam eingestellt wird. Nach einiger Zeit des Gebrauchs sollten die Einstellungen überprüft und ggf. geändert werden. Dazu, aber auch zum Warten der Scharniere oder Schwenklager ist es notwendig, dass die Rückschlagvorrichtung aus der Rohrleitung ausgebaut wird, da ansonsten an die für die Einstellung vorgesehen Elemente bzw. an die Scharniere oder Schwenklager nicht herangelangt werden kann.

Das Ausbauen der Rückschlagvorrichtung aus der Rohrleitung hat sich als umständlich erwiesen.

Hier setzt die Erfindung an.

Der Erfindung liegt das Problem zu Grunde eine Rückschlagvorrichtung und die schwenkbare Verbindung zwischen der Klappe und dem Gehäuse so zu verbessern, dass sie einfacher gewartet und eingestellt werden kann.

Dieses Problem wird erfindungsgemäß dadurch gelöst, dass die Klappe an dem Gehäuse wenigstens ein biegsames Verbindungselement aufweist, das mit einem ersten Endbereich an dem Gehäuse befestigt ist und mit einem zweiten Endbereich an der Klappe befestigt ist.

Ein Scharnier oder ein Schwenklager wie man es von bekannten Rückschlagvorrichtungen kennt, ist bei der erfindungsgemäße Rückschlagvorrichtung nicht vorgesehen. Stattdessen wird das biegsame Verbindungselement verwendet, welches eine Bewegung der Klappe zum Gehäuse ermöglicht. Das biegsame Verbindungselement ist wartungsfrei.

Bei einer erfindungsgemäßen Rückschlagvorrichtung kann die Länge eines Abschnitts des Verbindungselementes zwischen dem Gehäuse und der Klappe einstellbar sein. Das ist vorzugsweise von außerhalb des Gehäuses möglich. Damit kann die Position der Verbindung zwischen dem Verbindungselement und der Klappe relativ zum Gehäuse von außerhalb des Gehäuses festgelegt werden. Ein Öffnen des Gehäuses oder ein Ausbau des Gehäuses aus der Rohrleitung ist dazu nicht notwendig.

Das Verbindungselement einer erfindungsgemäßen Rückschlagvorrichtung kann an dem ersten Endbereich ein Außengewinde aufweisen.

Der erste Endbereich kann ein Durchgangsloch des Gehäuses durchgreifen. Dazu kann er in einer weiteren Hülse geführt sein, die in dem Durchgangsloch befestigt ist.

Auf dem aus dem Gehäuse herausragenden Abschnitt des ersten Endbereiches kann eine Mutter aufgeschraubt sein. Durch ein Drehen der Mutter kann die Länge des Abschnitts des Verbindungselementes zwischen dem Gehäuse und der Klappe eingestellt werden.

Eine erfindungsgemäße Rückschlagvorrichtung kann ein Auflageelement aufweisen, auf welchem das Verbindungselement zumindest im geschlossenen Zustand der Rückschlagvorrichtung aufliegen kann. Eine Position eines Auflageortes, an dem das Verbindungselement auf dem Auflageelement aufliegt, kann einstellbar sein. Das Auflageelement kann einen Bereich mit einem Außengewinde aufweisen. Der Bereich des Auflageelementes mit dem Außengewinde kann ein Durchgangsloch des Gehäuses durchgreifen. Dann kann auf einem aus dem Gehäuse herausragenden Abschnitt des Bereichs des Auflageelementes mit dem Außengewinde eine Mutter aufgeschraubt sein. Durch ein Drehen der Mutter kann die Position des Auflageortes, an dem das Verbindungselement (4) auf dem Auflageelement aufliegt, eingestellt werden.

Das Auflageelement kann ein U-förmig gebogener Bolzen sein, dessen Endbereiche Außengewinde haben und auf dessen mittleren Bereich das Verbindungselement aufliegt.

Das Gehäuse kann eingangsseitig einen konischen Abschnitt haben, dessen Durchmesser vom Eingang zur Mitte des Gehäuses größer wird.

In den konischen Abschnitt kann ein am Eingang beginnender Stutzen hineinragen, dessen freies Ende den Sitz der Rückschlagvorrichtung bildet.

Die Durchgangslöcher für das Auflageelement und das Verbindungselement sind in dem konischen Abschnitt des Gehäuses vorgesehen.

Die Rückschlagvorrichtung kann zwei Verbindungselemente und zwei Auflageelemente aufweisen.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:

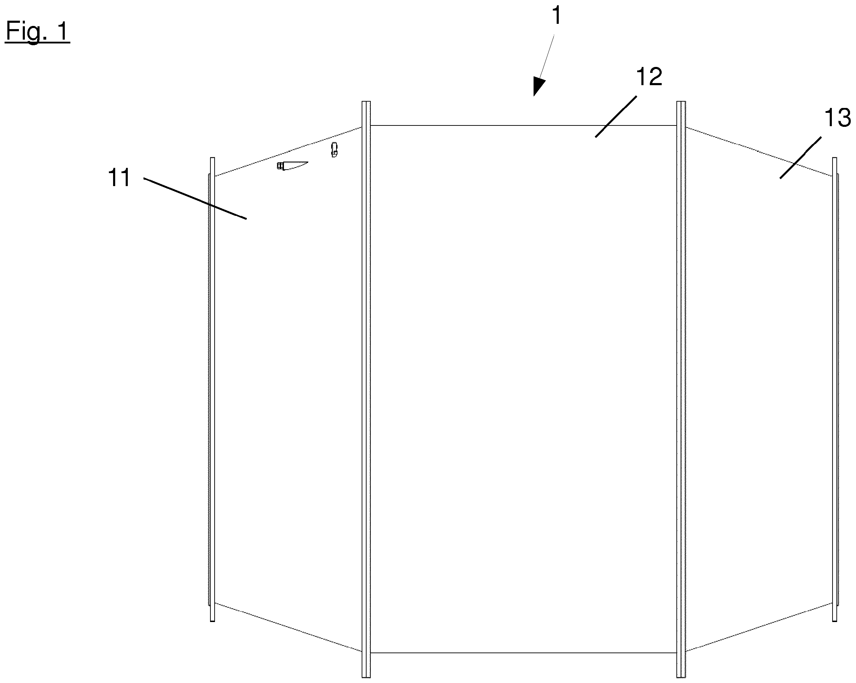

- Fig. 1: eine Seitenansicht einer erfindungsgemäßen Rückschlageinrichtung,

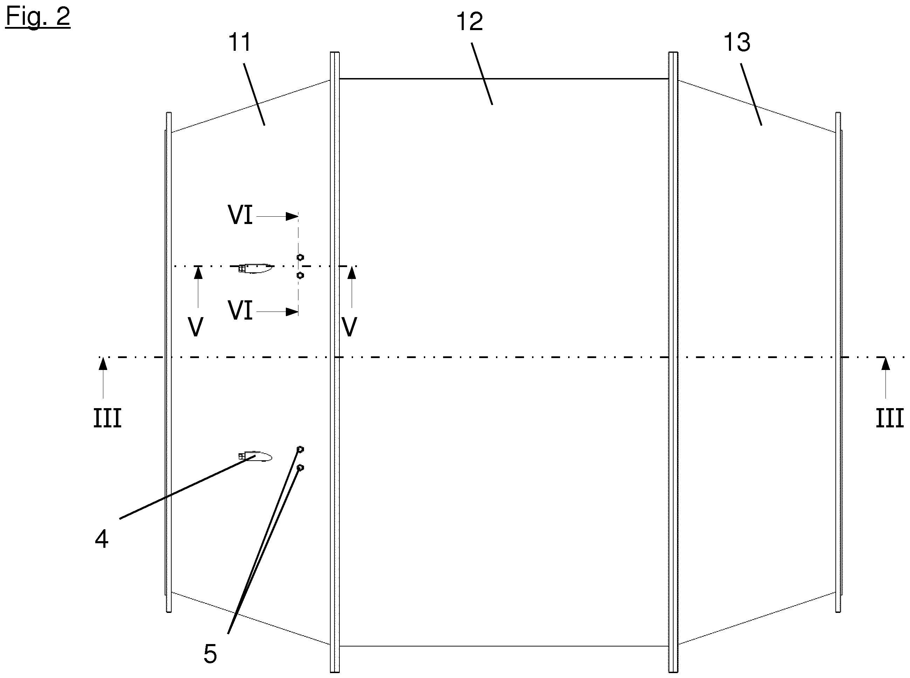

- Fig. 2: eine Draufsicht auf die Rückschlagvorrichtung,

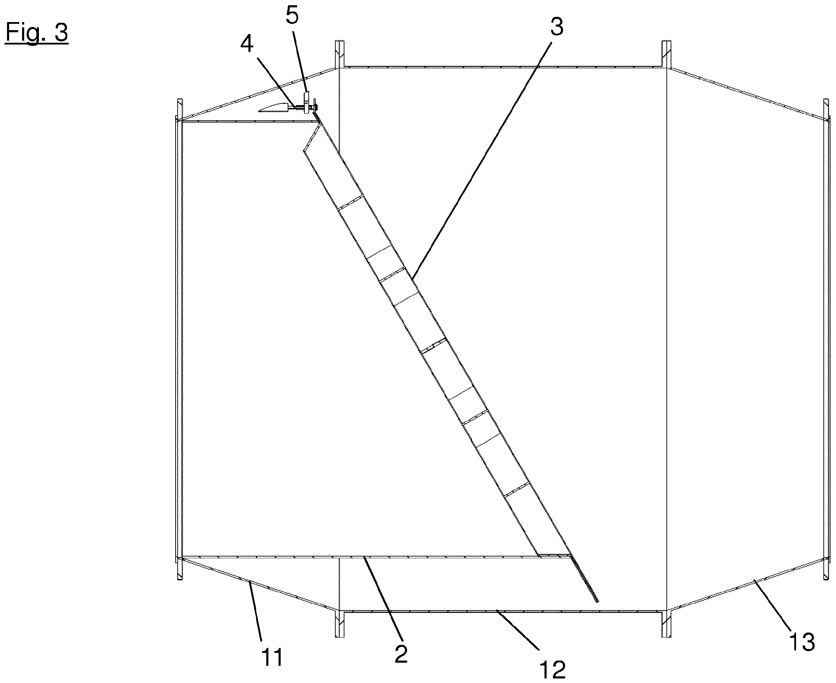

- Fig. 3: einen Längsschnitt durch die Rückschlagvorrichtung gemäß Linie III-III in Fig. 2,

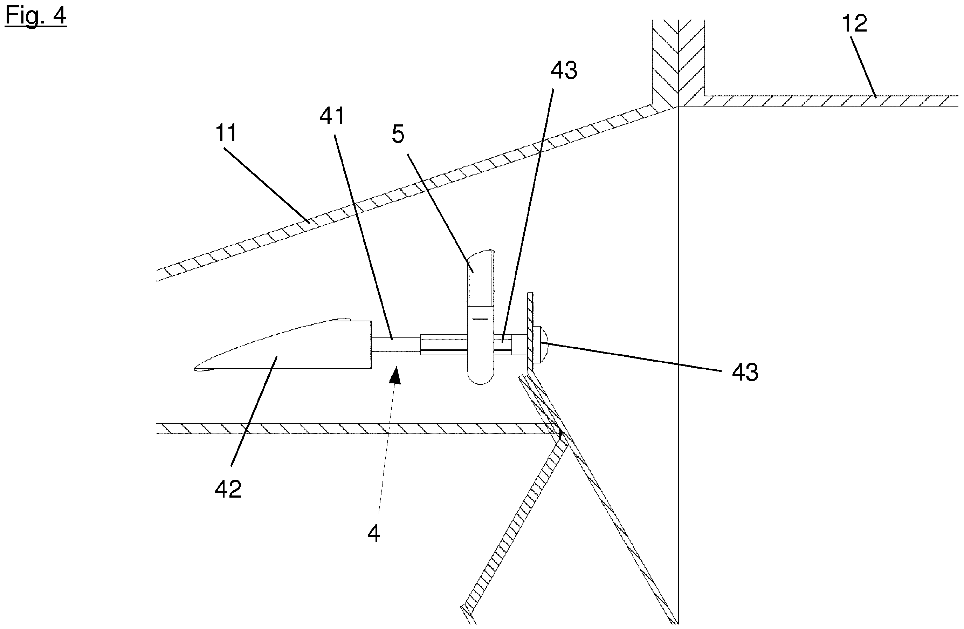

- Fig. 4: einen vergrößerten Ausschnitt aus Fig. 3,

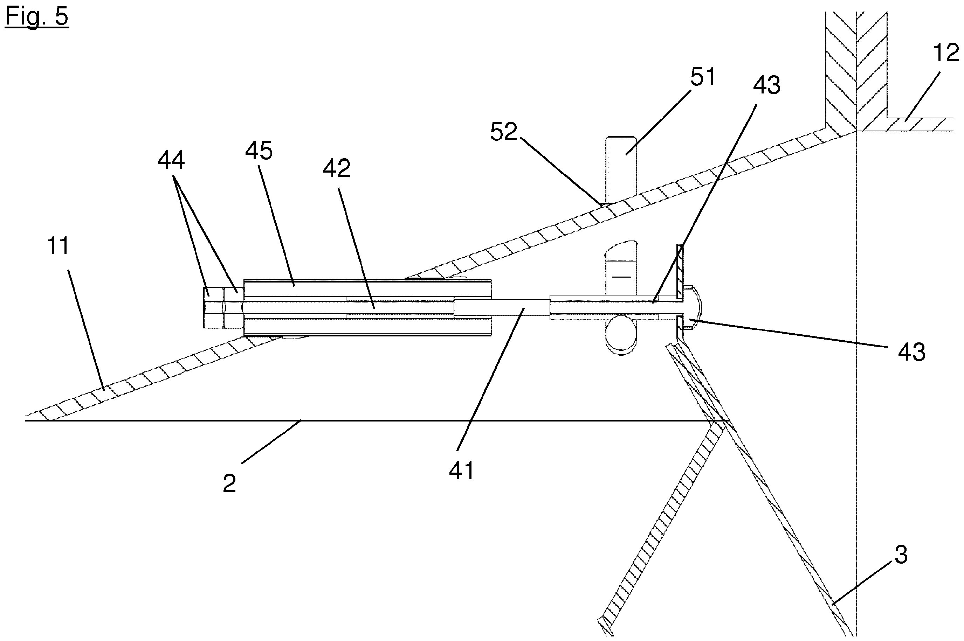

- Fig. 5: einen Schnitt gemäß der Linie V-V in Fig. 3 und

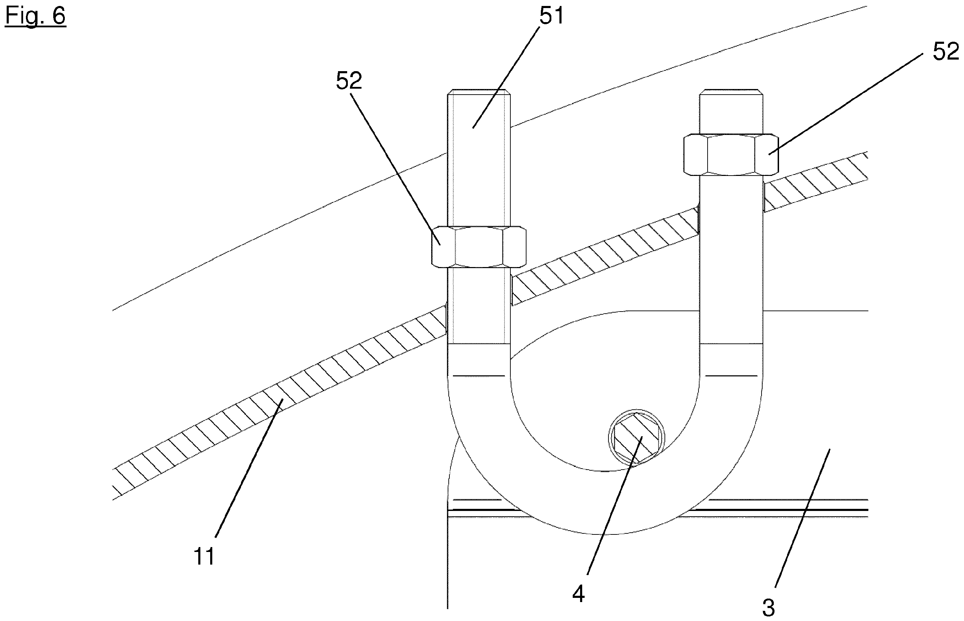

- Fig. 6: einen Schnitt gemäß der Linie VI-VI in Fig 3.

Die in den Figuren dargestellte erfindungsgemäße Rückschlagvorrichtung weist ein Gehäuse 1 auf, dass eine fassähnliche Form hat. Es hat einen eingangsseitigen konischen Abschnitt 11, einen kreiszylindrischen mittleren Abschnitt 12 und einen ausgangsseitigen konischen Abschnitt 13.

Mit dem Eingang des Gehäuses verbunden ragt in das Gehäuse 1 ein Stutzen 2 hinein. Dieser ist ausgangsseitig schräg abschnitten. Dieses schräg abgeschnittene Ende des Stutzens bildet einen Sitz 21 der Rückschlagvorrichtung, an dem im geschlossenen Zustand der Rückschlagvorrichtung, in der die Rückschlagvorrichtung in den Figuren dargestellt ist, eine Klappe 3 der Rückschlagvorrichtung anliegt.

Die Klappe 3 ist über zwei biegsame Verbindungselemente 4 mit dem Gehäuse 1 verbunden. Jedes der Verbindungselemente 4 hat einen mittleren biegsamen Abschnitt, der durch ein Stahlseil 41 gebildet ist, aber alternativ aus einem anderem geeigneten biegsamen Material oder biegsamen Teilen hergestellt sein könnte.

Nachfolgend wird eines der Verbindungselemente 4 genauer beschrieben. Das andere der beiden Verbindungselemente ist identisch gestaltet.

Die Enden des Stahlseils 41 sind in Hülsen 42, 43 gefasst.

Die Hülse 42 an einem ersten Ende weist ein Außengewinde auf. Dieses Außengewinde ist durch eine weitere Hülse 45 geführt, die in eine Ausnehmung in dem eingangsseitigem konischen Abschnitt 11 des Gehäuses 1 eingesetzt ist. Das Außengewinde ist in der weiteren Hülse 45 verschiebbar. Von außerhalb des Gehäuses 1 sind zwei Muttern 44 auf das Außengewinde geschraubt, wobei die eine der beiden Muttern 44 eine Kontermutter ist.

Die Hülse 43 an einem zweiten Ende des Stahlseils 41 weist einen Pilzkopf 431 auf. Die zweite Hülse 43 ist durch eine Ausnehmung in der Klappe 3 geführt und zwar so, dass der Pilzkopf 431 auf der Ausgangsseite der Klappe angeordnet ist, während das übrige Verbindungselement 4 auf der Eingangsseite der Klappe angeordnet ist.

Durch Einstellen der Mutter 44 kann der Abstand zwischen den Muttern 44 und dem Pilzkopf 431 eingestellt werden. Zugleich kann dadurch die Länge eines Abschnitts des Verbindungselementes 4 zwischen dem Gehäuse 1 und der Klappe 3 eingestellt werden. Damit ist von außerhalb des Gehäuses 1 eine Eistellung der Klappe 3 möglich, insbesondere kann eingestellt werden, welche Position die Klappe in der Richtung vom Eingang zum Ausgang der Rückschlagvorrichtung hat.

Jedes der beiden Verbindungselemente 4 liegt mit seinem zwischen dem Gehäuse 1 und der Klappe 3 liegendem Abschnitt auf je einem Auflageelement 5 auf.

Nachfolgend wird eines der Auflageelemente 5 genauer beschrieben. Das andere der beiden Auflageelemente 5 ist identisch gestaltet.

Das Auflageelement 5 weist einen U-förmig gebogenen Bolzen 51 auf, der an seinen Enden je ein Außengewinde hat. Diese Enden sind durch Ausnehmungen in dem eingangsseitigen konischen Abschnitt 11 des Gehäuses 1 geführt. Von außen sind Muttern 52 auf die Enden geschraubt, mittels derer eingestellt werden kann, wie weit der Bolzen 51 in das Gehäuse 1 hineinragt. Damit kann von außerhalb des Gehäuses der Auflageort, an dem das Verbindungselement 4 auf dem Bolzen 5 aufliegt eingestellt werden. Zugleich kann damit insbesondere die Position und Ausrichtung der Klappe 3 senkrecht zur Richtung vom Eingang zum Ausgang der Rückschlagvorrichtung eingestellt werden.

## Patentansprüche

1. Rückschlagvorrichtung z.B. für eine Rohgasleitung mit
- einem Gehäuse (1),
- einem in dem Gehäuse (1) angeordneten Sitz (21) und
- einer Klappe (3), die schwenkbar in dem Gehäuse (1) befestigt ist und in einem geschlossenen Zustand der Rückschlagvorrichtung auf dem Sitz (21) liegt und in einem geöffneten Zustand der Rückschlagvorrichtung von dem Sitz (21) abgehoben ist,
**dadurch gekennzeichnet, dass**
die Klappe (3) an dem Gehäuse (1) wenigstens ein biegsames Verbindungselement (4) aufweist, das mit einem ersten Endbereich an dem Gehäuse (1) befestigt ist und mit einem zweiten Endbereich an der Klappe (3) befestigt ist.

2. Rückschlagvorrichtung nach Anspruch 1, **dadurch gekennzeichnet, dass** die Länge eines Abschnitts des Verbindungselementes (4) zwischen dem Gehäuse (1) und der Klappe (3) einstellbar ist.

3. Rückschlagvorrichtung nach Anspruch 1 oder 2, **dadurch gekennzeichnet, dass** das Verbindungselement (4) an dem ersten Endbereich ein Außengewinde aufweist.

4. Rückschlagvorrichtung nach Anspruch 3, **dadurch gekennzeichnet, dass** der erste Endbereich ein Durchgangsloch des Gehäuses (1) durchgreift und dass auf dem aus dem Gehäuse herausragenden Abschnitt des ersten Endbereiches eine Mutter (44) aufgeschraubt ist.

5. Rückschlagvorrichtung nach Anspruch 4, **dadurch gekennzeichnet, dass** durch ein Drehen der Mutter (44) die Länge des Abschnitts des Verbindungselementes (4) zwischen dem Gehäuse (1) und der Klappe (3) einstellbar ist.

6. Rückschlagvorrichtung nach einem der Ansprüche 1 bis 5, **dadurch gekennzeichnet, dass** die Rückschlagvorrichtung ein Auflageelement (5) aufweist, auf welchem das Verbindungselement (4) zumindest im geschlossenen Zustand der Rückschlagvorrichtung aufliegt.

7. Rückschlagvorrichtung nach Anspruch 6, **dadurch gekennzeichnet, dass** eine Position eines Auflageortes, an dem das Verbindungselement (4) auf dem Auflageelement (5) aufliegt einstellbar ist.

8. Rückschlagvorrichtung nach Anspruch 6 oder 7, **dadurch gekennzeichnet, dass** das Auflageelement (5) einen Bereich mit einem Außengewinde aufweist.

9. Rückschlagvorrichtung nach Anspruch 8, **dadurch gekennzeichnet, dass** der Bereich des Auflageelementes (5) mit dem Außengewinde ein Durchgangsloch des Gehäuses (1) durchgreift und dass auf einem aus dem Gehäuse (1) herausragenden Abschnitt des Bereichs des Auflageelementes (5) mit dem Außengewinde eine Mutter (51) aufgeschraubt ist.

10. Rückschlagvorrichtung nach Anspruch 9, **dadurch gekennzeichnet, dass** durch ein Drehen der Mutter (51) die Position des Auflageortes, an dem das Verbindungselement (4) auf dem Auflageelement (5) aufliegt, einstellbar ist.

11. Rückschlagvorrichtung nach einem der Ansprüche 6 bis 10, **dadurch gekennzeichnet, dass** das Auflageelement (5) ein U-förmig gebogener Bolzen ist, dessen Endbereich Außengewinde haben, und auf dessen mittleren Bereich das Verbindungselement (4) aufliegt.

12. Rückschlagvorrichtung nach einem der Ansprüche 1 bis 11, **dadurch gekennzeichnet, dass** das Gehäuse (1) eingangsseitig einen konischen Abschnitt (11) hat, dessen Durchmesser vom Eingang zur Mitte des Gehäuses (1) größer wird.

13. Rückschlagvorrichtung nach Anspruch 12, **dadurch gekennzeichnet, dass** in den konischen Abschnitt (11) ein am Eingang beginnender Stutzen (2) hineinragt, dessen freies Ende den Sitz (21) der Rückschlagvorrichtung bildet.

14. Rückschlagvorrichtung nach Anspruch 12 oder 13, **dadurch gekennzeichnet, dass** die Durchgangslöcher in dem konischen Abschnitt (11) des Gehäuses (1) vorgesehen sind.

15. Rückschlagvorrichtung nach einem der Ansprüche 1 bis 14, **dadurch gekennzeichnet, dass** die Rückschlagvorrichtung zwei Verbindungselemente (4) und zwei Auflageelemente (5) aufweist.
